(19) Europäisches Patentamt
European Patent Office
Office européen des brevets

(11) **EP 3 699 445 A1**

(12) **EUROPEAN PATENT APPLICATION**
published in accordance with Art. 153(4) EPC

(43) Date of publication:
**26.08.2020 Bulletin 2020/35**

(51) Int Cl.:
**F16C 19/08** (2006.01)　　　**F16C 43/06** (2006.01)

(21) Application number: **17929360.0**

(22) Date of filing: **17.10.2017**

(86) International application number:
**PCT/JP2017/037450**

(87) International publication number:
**WO 2019/077670 (25.04.2019 Gazette 2019/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nittan Valve Co., Ltd.**
**Hadano-shi, Kanagawa 257-0031 (JP)**

(72) Inventor: **KAMEDA Michihiro**
**Hadano-shi**
**Kanagawa 257-0031 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **MULTI-ROW BALL BEARING AND MANUFACTURING METHOD THEREFOR**

(57) The present invention provides a multirow ball bearing and a method of manufacturing the same capable of effectively dispersing a radial load while reducing a frictional force when an inner ring and an outer ring rotate relative to each other. Multiple ball rows (5) are adjacently interposed between an inner ring (3) and an outer ring (4); each of the multiple ball rows (5) includes balls (5a) arranged with prescribed gaps (L) and is ar- ranged to be shifted in a row direction of the ball row (5) relative to a ball row (5) adjacent to the ball row (5), and the balls (5a) in each of the ball rows (5) face spaces (LS) formed by the prescribed gaps (L) in a ball row (5) adjacent to the ball row (5) and are each brought into contact with two of the balls (5a) forming each of the prescribed gaps.

Fig. 3

EP 3 699 445 A1

**Description**

TECHNICAL FIELD

The present invention relates to a multirow ball bearing including multiple ball rows interposed between an inner ring and an outer ring, and a method of manufacturing the same.

BACKGROUND ART

A multirow ball bearing is widely known as a bearing. This multirow ball bearing generally includes multiple ball rows interposed between an inner ring and an outer ring disposed on the outer circumferential side of the inner ring such that the ball rows are adjacent to each other in an axial direction of the inner ring and the outer ring, and a support shaft such as a rotary shaft is attached to the inner ring of the multirow ball bearing.

In a proposed multirow ball bearing, as described in Patent Document 1 (Example 4: specification paragraphs [0023] to [0026], Fig. 4), balls of multiple ball rows (for supporting a radial load) are arranged with prescribed gaps, and each of the ball rows is arranged to be shifted in a row direction of the ball row relative to a ball row adjacent thereto so as to allow the balls of each of the ball rows to face spaces formed by the prescribed gaps in a ball row adjacent to the ball row, and to enable the balls to roll and move in an axial direction (an axial direction of the inner ring and the outer ring).

According to this bearing, a radial load (radial inward load) acting on the outer ring can be dispersed by the multiple balls of the multiple ball rows, and since adjacent balls are not in contact with each other, a frictional force can greatly be reduced at the time of relative rotation between the inner ring and the outer ring.

PRIOR ART DOCUMENT

PATENT DOCUMENT

Patent Document 1: Japanese Laid-Open Patent Publication No. 2005-48932

SUMMARY OF THE INVENTION

PROBLEM TO BE SOLVED BY THE INVENTION

However, in the multirow ball bearing, the balls of the multiple ball rows can freely roll and move in the axial direction (see Patent Document 1 [0026]), and therefore, when a radial load acts on the outer ring, the radial load is received in a state hardly regarded as a uniform state based on the free rolling movement of the balls. Therefore, when a radial load acts on the outer ring, the radial load cannot effectively be dispersed, and the merits of the multirow arrangement cannot sufficiently be reflected in terms of an increase in basic dynamic load rating and a longer operating life.

The present invention has been made in view of the situations, and a first object thereof is to provide a multirow ball bearing capable of effectively dispersing a radial load while reducing a frictional force when an inner ring and an outer ring rotate relative to each other.

A second object is to provide a multirow ball bearing manufacturing method for manufacturing the multirow ball bearing.

MEANS FOR SOLVING PROBLEM

To achieve the first object, the following configurations (1) to (8) are employed in the present invention.

(1) In a multirow ball bearing including multiple ball rows interposed between an inner ring and an outer ring disposed on the outer circumferential side of the inner ring such that the ball rows are adjacent to each other in an axial direction of the inner ring and the outer ring,
each of the multiple ball rows includes balls arranged with prescribed gaps in the ball row and is arranged to be shifted in a row direction of the ball row relative to a ball row adjacent to the ball row, and
the balls in each of the ball rows face spaces formed by the prescribed gaps in a ball row adjacent to the ball row and are each brought into contact with two of the balls forming each of the prescribed gaps.
According to this configuration, each of the balls of each of the ball rows is brought into contact with the balls arranged adjacently in the row direction in a ball row adjacent to the ball row so that the balls do not individually freely roll and move (the balls integrally revolve while rotating about its own axis when the inner and outer rings relatively rotate), and even if a radial load (radial inward load) acts on the outer ring, the radial load acting on the outer ring can be received in an approximately uniform state. Therefore, the radial load acting on the outer ring can effectively be dispersed.

On the other hand, the balls in the ball rows integrally revolve while rotating about its own axis at the time of relative rotation between the inner ring and the outer ring, and the rotation about its own axis has a rotation component based on the revolution of the ball rows added to a basic rotation component based on the relative rotation between the inner ring and the outer ring (the rotation component in the direction opposite to the revolution direction), so that the balls of the adjacent ball rows each rotate in contact with each other under a symmetrically inclined combined axis. Therefore, the balls in contact with each other move (rotate) toward substantially the same side at the contact portion therebetween although not exactly in the same direction, so that the frictional force can be reduced as compared to when the movement directions of the contacting balls are opposite to each other at the contact portion. This enables provision of the multirow ball bearing capable of effectively dispersing the radial load acting on the outer ring while reducing the frictional force at the time of relative rotation between the inner ring and the outer ring as much as possible.

Additionally, in this case, since the collision between the balls due to the rolling movement of the balls is eliminated, the balls can be prevented from being damaged or generating a collision sound due to the collision.

(2) Under the configuration of (1),

the multiple ball rows are four or more even rows, and

the multiple ball rows are set such that during relative rotation between the inner ring and the outer ring, a revolution driving force of the outermost ball rows becomes relatively larger than a revolution driving force of the inner ball rows adjacent to the outermost ball rows.

According to this configuration, the balls of the ball rows not only can stably obtain a rotation component based on a revolution driving force difference of the ball rows, but also can cause a combined axis formed by the rotation component based on the revolution driving force difference of the ball rows and a basic rotation component based on the relative rotation between the inner ring and the outer ring to rapidly attain a state of an optimum combined axis so as to make the multi-row ball bearing preferable in terms of reduction in initial rotation resistance (frictional resistance).

(3) Under the configuration of (1),

the multiple ball rows are three or more odd rows, and

the multiple ball rows are set such that a contact resistance to balls in one outermost ball row from balls of an inner ball row adjacent to the one outermost ball row is different from a contact resistance to balls in the other outermost ball row from balls of an inner ball row adjacent to the other outermost ball row.

According to this configuration, the rotation component based on the revolution driving force difference can be generated in the balls in one or the other outermost ball row at earlier timing, and the rotation of the balls about its own axis in the one or the other outermost ball row can sequentially be transmitted to the balls of the ball rows toward the other or the one outermost ball row. Therefore, even if the multiple ball rows are three or more odd rows, the balls of the adjacent ball rows can be brought into contact with each other and respectively rotated under the symmetrically inclined combined axes, and the balls in contact with each other can be moved (rotated) toward substantially the same side at the contact portion therebetween although not exactly in the same direction (reduction in frictional force).

(4) Under the configuration of (1),

the multiple ball rows are two rows.

According to this configuration, since the balls in both ball rows revolve while being in contact with each other, rotation components are generated in opposite directions in the balls in both ball rows, so that even if the multiple ball rows are two rows, the balls of the adjacent ball rows can be brought into contact with each other and respectively rotated under the symmetrically inclined combined axes. Therefore, the balls in contact with each other can be moved (rotated) toward substantially the same side at the contact portion therebetween although not exactly in the same direction, and a reduction in frictional force can be achieved.

(5) Under the configuration of (1),

raceway grooves for fitting the multiple ball rows are respectively formed on at least one of an outer circumferential surface of the inner ring and an inner circumferential surface of the outer ring.

According to this configuration, even if no restricting parts are disposed on at least one of both outer side portions in the axial direction of the inner ring and both outer side portions in the axial direction of the outer ring, the multiple ball rows can appropriately be interposed between the inner ring and the outer ring such that movement in the axial direction to the outside of the inner ring and the outer ring is restricted.

(6) Under the configuration of (1),

outer side portions in an axial direction of at least one of the inner ring and the outer ring are provided with restricting parts for restricting the multiple ball rows from moving in the axial direction to the outside of the inner ring and the outer ring on both sides in the axial direction of the inner ring and the outer ring.

According to this configuration, even if no raceway grooves for fitting the multiple ball rows are respectively formed on at least one of the outer circumferential surface of the inner ring and the inner circumferential surface of the outer ring, the multiple ball rows can appropriately be interposed between the inner ring and the outer ring such that movement in the axial direction to the outside of the inner and outer rings is restricted.

(7) Under the configuration of (6),
the restricting parts are disposed on at least one of both outer side portions in the axial direction of the inner ring and both outer side portions in the axial direction of the outer ring.

According to this configuration, even if no raceway grooves for fitting the multiple ball rows are respectively formed on at least one of the outer circumferential surface of the inner ring and the inner circumferential surface of the outer ring, the multiple ball rows can appropriately be interposed between the inner ring and the outer ring according to a specific aspect such that movement in the axial direction to the outside of the inner and outer rings is restricted.

(8) Under the configuration of (7),
the multiple ball rows are made up of even rows. The multiple ball rows are configured to have an even number of rows .

According to this configuration, even if at least one of both outer side portions in the axial direction of the inner ring and both outer side portions in the axial direction of the outer ring are provided with the restricting parts for restricting the multiple ball rows from moving in the axial direction of the inner ring and the outer ring, and the multiple ball rows are integrally moved in the circumferential direction of the inner and outer rings while being restricted by the restricting parts, the movement direction based on the rotation of the balls about its own axis on both outer sides in the axial direction of the inner and outer rings faces the same side as the movement direction of the restricting parts relative to the multiple ball rows at contact portions with the restricting parts although not exactly in the same direction, so that the frictional force due to contact between the balls on both outer sides in the axial direction of the inner and outer rings and the restricting parts
can be reduced as compared to when the movement direction based on the rotation of the balls about its own axis on both outer sides in the axial direction of the inner and outer rings is opposite to the movement direction of the restricting parts relative to the multiple ball rows at the contact portions with the restricting parts.

To achieve the second object, the following configuration (9) is employed.

(9) In a method of manufacturing a multirow ball bearing including multiple ball rows interposed between an inner ring and an outer ring disposed on the outer circumferential side of the inner ring such that the ball rows are adjacent to each other in an axial direction of the inner ring and the outer ring, the method includes
preparing as the outer ring a ring provided with multiple raceway grooves formed adjacently in the axial direction of the outer ring on an inner circumferential surface of the outer ring and a rod-shaped jig enabled to enter the inside of the outer ring;
first, inserting the jig from one opening of the outer ring into the outer ring to form a guide path for the raceway groove closest to the one opening of the outer ring with an inserted tip end surface of the jig, and supplying the balls from the other opening of the outer ring into the outer ring to perform a ball loading operation of loading multiple balls into the raceway groove closest to the one opening of the outer ring;
subsequently, advancing the jig into the outer ring toward the other opening of the outer ring to sequentially form guide paths for the raceway grooves closer to the other opening of the outer ring than the raceway groove closest to the one opening of the outer ring, and performing the ball loading operation in each of the raceway grooves by using each of the guide paths each time the guide path is formed, so as to bring the balls in each of the raceway grooves into contact with balls adjacently arranged with gaps in a row direction in the raceway grooves adjacent to the raceway groove in a straddling manner between the adjacently arranged balls;
subsequently, after the ball loading operation for the raceway groove closest to the other opening of the outer ring is completed, bringing one end surface in the axial direction of the inner ring into contact with the tip end surface of the jig; and
subsequently, moving the jig and the inner ring toward the one opening of the outer ring while maintaining a contacting relationship between the tip end surface of the jig and the one end surface in the axial direction of the inner ring so as to achieve a state in which an outer circumferential surface of the inner ring faces an inner circumferential surface of the outer ring.

According to this configuration, a type of the multirow ball bearing of (5) having the raceway grooves on the inner circumferential surface of the outer ring can specifically be manufactured.

EFFECT OF THE INVENTION

From the above details, the present invention can provide the multirow ball bearing capable of effectively dispersing a radial load while reducing a frictional force when the inner ring and the outer ring rotate relative to each other. And, the present invention can provide the multirow ball bearing manufacturing method for manufacturing the multirow ball bearing.

BRIEF DESCRIPTION OF DRAWINGS

Fig. 1 is a longitudinal sectional view illustrating a multirow ball bearing according to a first embodiment.

Fig. 2 is a partially enlarged front view illustrating the multirow ball bearing according to the first embodiment.

Fig. 3 is an explanatory view for two-dimensionally explaining movement of balls (rolling elements) disposed on an inner ring (raceway surface) according to the first embodiment.

Fig. 4 is an explanatory view for two-dimensionally explaining rotation components of balls rotating about a z-axis on the inner ring.

Fig. 5 is an explanatory view for explaining coordinates of a right-hand system defined for explanation of a behavior of a ball on the inner ring (x-axis: ball revolution direction, y-axis: inner-ring axial direction, z-axial direction away from an inner-ring inner circumferential surface).

Fig. 6 is an explanatory view for explaining what combined axis is formed by a rotation component about the y-axis and a rotation component about the z-axis.

Fig. 7 is an explanatory view illustrating respective combined axes of balls in ball rows according to the first embodiment.

Fig. 8 is an explanatory view for explaining how a frictional force (dynamic frictional force) of a contact portion between balls in both of adjacent ball rows is according to the first embodiment.

Fig. 9 is an explanatory view for explaining how the frictional force (dynamic frictional force) of the contact portion between the balls in the adjacent ball rows is when the balls of the ball rows rotate about the y-axis.

Fig. 10 is an explanatory view for explaining a process of change of a combined axis SA to an optimum combined axis SA0.

Fig. 11 is an explanatory view for explaining dimensions, angles, etc. of a specific structure according to the embodiment.

Fig. 12 is a partially enlarged explanatory view in which a portion of Fig. 11 is enlarged.

Fig. 13 is an explanatory view illustrating a manufacturing method according to the first embodiment.

Fig. 14 is a view for explaining a continuation from Fig. 13.

Fig. 15 is a view for explaining a continuation from Fig. 14.

Fig. 16 is a view for explaining a continuation from Fig. 15.

Fig. 17 is an explanatory view for two-dimensionally explaining a second embodiment (in the case of ball rows arranged in three rows (odd rows) on the inner ring (raceway surface)).

Fig. 18 is an explanatory view for two-dimensionally explaining a third embodiment (in the case of ball rows arranged in two rows (even rows) on the inner ring (raceway surface))

Fig. 19 is a partial longitudinal sectional view illustrating a multirow ball bearing according to a fourth embodiment.

Fig. 20 is a partial longitudinal sectional view illustrating a multirow ball bearing according to a fifth embodiment.

Fig. 21 is an explanatory view for two-dimensionally explaining an action (a motion of balls arranged on the inner ring (raceway surface)) of the fifth embodiment.

Fig. 22 is a diagram illustrating dimensions of a specific structure according to the embodiment.

Fig. 23 is a view for explaining basic dynamic load ratings of various bearings.

MODES FOR CARRYING OUT THE INVENTION

Embodiments of the present invention will now be described with reference to the drawings.

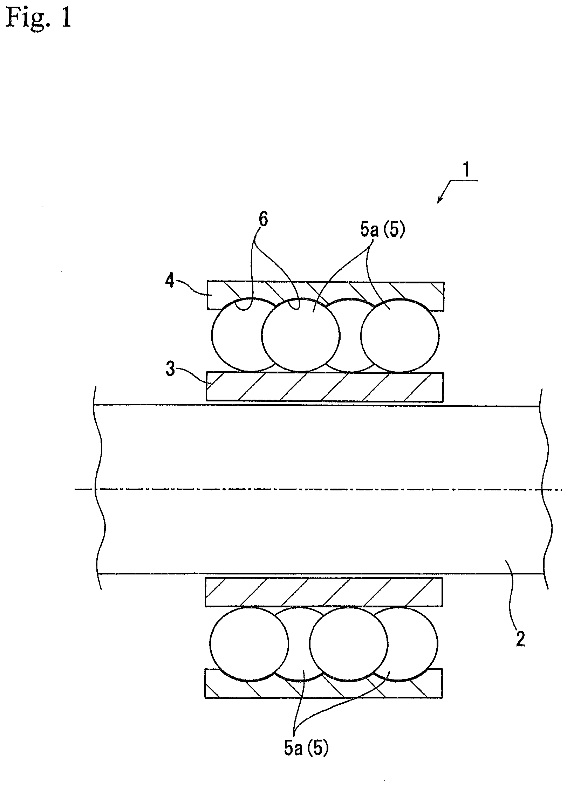

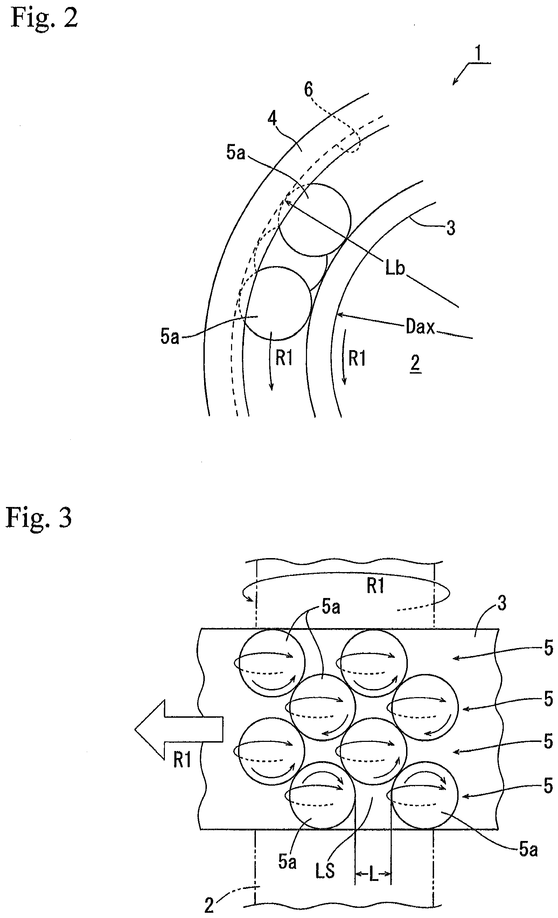

1. In Figs. 1 and 2, reference sign 1 denotes a multirow ball bearing serving as a bearing. This multirow ball bearing 1 includes an inner ring 3 for supporting a rotary shaft 2 serving as a support shaft, an outer ring 4 disposed on the outer circumferential side of the inner ring 3, and multiple ball rows 5 interposed between the inner ring 3 and the outer ring 4.

(1) The inner ring 3 has an outer circumferential surface and an inner circumferential surface formed as smooth surfaces. The outer circumferential surface and the inner circumferential surface of the inner ring 3 have a constant width ensured in an axial direction of the inner ring 3, and the multiple ball rows 5 are arranged on the outer circumferential surface serving as a raceway surface, while the rotation shaft 2 is appropriately supported by a wide surface on the inner circumferential surface.

(2) The outer ring 4 is disposed with an inner circumferential surface thereof facing the outer circumferential surface of the inner ring 3. The inner circumferential surface of the outer ring 4 is provided with respective raceway grooves 6 for fitting the multiple ball rows. The raceway grooves 6 are formed adjacently in a width direction of the outer ring 4 (axial direction: left-right direction in Fig. 1) over the entire inner circumferential surface of the outer ring 4, and in this embodiment, the outer ring 4 has the four raceway grooves 6 formed in the width direction of the outer ring 4. The raceway grooves 6 each have a groove shape formed into an arc shape, and portions of balls 5a of the multiple ball rows 5 are put (fitted) into the raceway grooves 6 in a conforming state (rotatable state).

(3) As depicted in Figs. 1 to 3, the multiple ball rows 5 are arranged between the inner ring 3 and the outer ring 4 so as to be adjacent to each other in the axial direction thereof. The ball rows 5 have portions on the outer ring 4 side partially entering the inside of the raceway grooves 6, and the balls 5a of the ball rows 5 are allowed to rotate (about its own axis), while being restricted from moving in the axial direction of the inner ring 3 and the outer ring 4, by the raceway grooves 6. In each of the ball rows 5, the balls 5a of the ball row 5 are arranged with prescribed gaps L in a row direction of the ball row 5, and the ball rows 5 adjacent to the ball row 5 are arranged to be shifted in the row direction of the ball row 5. Each of the balls 5a of the ball row 5 faces a space LS of each of the prescribed gaps L in the ball rows 5 adjacent to the ball row 5 and is brought into contact with two of the balls 5a forming each of the prescribed gaps S.

(4) In the multirow ball bearing 1 as described above, while the rotation shaft 2 is integrated with the inner circumferential surface of the inner ring 3, the outer circumferential surface of the outer ring 4 is attached to an attachment member (not depicted), and when the inner ring 3 is rotated, as depicted in Fig. 3, the balls 5a between the inner ring 3 and the outer ring 4 integrally revolve (rotate) relative to the inner ring 3 in the same direction as a rotation direction R1 of the inner ring 3 (rotation direction of the rotation shaft 2) and each basically rotate about its own axis (spin) in a direction opposite to the rotation direction R1 of the inner ring 3 (described in detail later). Therefore, the inner ring 3 and the outer ring 4 rotate relative to each other, and the multirow ball bearing 1 fulfills a function of a bearing.

2. In the multirow ball bearing 1 as described above, although the balls 5a rotate in contact with the surrounding balls 5a, a reduction in frictional force is achieved. This will specifically be described.

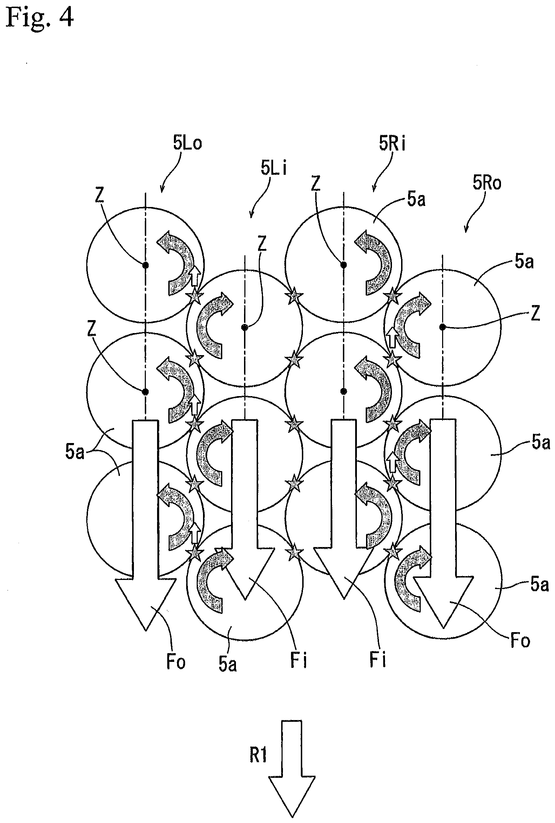

(1) Fig. 4 illustrates how the balls 5a of the ball rows 5 specifically operate in the state of Fig. 3. Obviously, in this case, the four ball rows 5 (even rows) are sequentially arranged in the width direction (left-right direction in Fig. 4) on the outer circumferential surface of the inner ring 3 (not depicted in Fig. 4), and in each of the ball rows 5, the balls 5a are arranged with the prescribed gaps L in the row direction, while each of the balls 5a of the ball row 5 is brought into contact with two of the balls 5a forming each of the prescribed gaps L in the ball rows 5 adjacent to the ball row 5.

(2) In such a structure, when the inner ring 3 and the outer ring 4 rotate relative to each other, the four ball rows 5 integrally revolve in the rotation direction of the inner ring 3, and the balls 5a of the ball rows 5 each basically rotate about its own axis in a direction opposite to the revolution direction R1 as described above (see Fig. 3). In this case, as compared to a revolution driving force (driving force for revolution) Fo of the left and right outermost ball rows 5 located on both outer sides in the width direction of the inner ring 3 (hereinafter, the left outermost ball row and the right outermost ball row in Fig. 4 will be referred to as a left outer ball row 5Lo and a right outer ball row 5Ro, respectively), a revolution driving force Fi becomes relatively small in the ball rows 5 disposed inside the two ball rows 5Lo, 5Ro (hereinafter, the ball row adjacent to the left outer ball row 5Lo and the ball row adjacent to the right outer ball row 5Ro will referred to as a left inner ball row 5Li and a right inner ball row 5Ri, respectively) . This is because the outer ball rows 5Lo, 5Ro are each brought into contact with the inner ball row 5Li (or 5Ri) only on the inside (one side) in the width direction, while the inner ball rows 5Li, 5Ri are brought into contact with the other ball rows 5 on both sides in the width direction (the left-right direction in Fig. 4) so that a movement resistance (brake torque) for each of the inner ball rows 5Li, 5Ri is doubled as compared to the movement resistance for each of the outer ball rows 5Lo, 5Ro. Moreover, it is thought that this is also related to a displacement in the revolution direction due to elastic deformation between the balls 5.

(3) A relative difference between the revolution driving force Fi of the inner ball rows 5Li, 5Ri and the revolution driving force Fo of the outer ball rows 5Lo, 5Ro affects the rotation of each of the balls 5a of the ball rows 5 about its own axis.

When the relative rotation between the inner ring 3 and the outer ring 4 makes the revolution driving force Fi of the inner ball rows 5Li, 5Ri relatively smaller than the revolution driving force Fo of the outer ball rows 5Lo, 5Ro as described above, the balls 5a (lower portions in Fig. 4) of the outer ball rows 5Lo, 5Ro applies a pressing force to the balls 5a (upper portions in Fig. 4) of the inner ball rows 5Li, 5Ri in the revolution direction R1 at contact portions (stars in Fig. 4) between the balls 5a of the outer ball rows 5Lo, 5Ro and the balls 5a of the inner ball rows 5Li, 5Ri, so that a reaction force acts as the reaction on the balls 5a of the outer ball rows 5Lo, 5Ro in the direction opposite to the revolution direction R1 (see outlined arrows in Fig. 4) . This reaction force has a point of action (contact portion) of the reaction force offset relative to a polar axis (z-axis described later) of each of the balls 5a in the outer ball rows 5Lo, 5Ro and therefore generates a rotation component about the polar axis for each of the balls 5a in the outer ball rows 5Lo, 5Ro. Obviously, in this case, at the contact points of the balls 5a of the inner ball row 5Li (5Ri) with the balls 5a of the outer ball row 5Lo (5Ro), the input to the contact points on the front side in the revolution direction R1 (lower contact points of the balls 5a in the outer ball row 5Lo (5Ro) in Fig. 4) becomes larger than the input to the contact points on the rear side in the revolution direction R1 (upper contact points of the balls 5a in the outer ball row 5Lo (5Ro) in Fig. 4) based on the relative difference between the revolution driving force Fi of the inner ball rows 5Li, 5Ri and the revolution driving force Fo of the outer ball rows 5Lo, 5Ro. Therefore, under the condition that the balls 5a of the ball rows 5 are rotatably sandwiched between the inner ring 3 and the outer ring 4, the rotation component based on the relative difference between the revolution driving force Fo of the outer ball row 5Lo (5Ro) and the revolution driving force Fi of the inner ball row 5Li (5Ri) is added to a basic rotation component based on the relative rotation between the inner ring 3 and the outer ring 4, so that the rotation of each of the balls 5a in the outer ball rows 5Lo, 5Ro about its own axis is a combined rotation thereof.

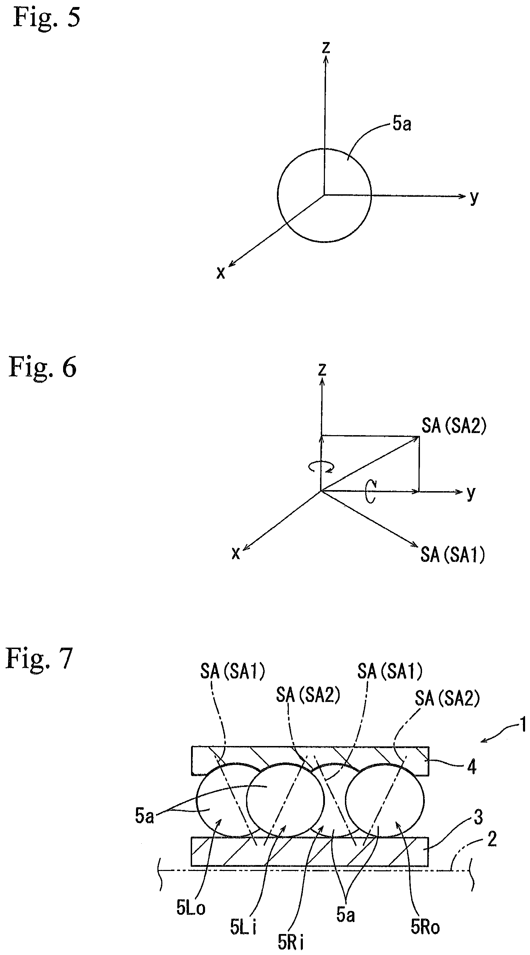

(4) The rotation of each of the balls 5a of the outer ball rows 5Lo, 5Ro about its own axis will more specifically be described with coordinates of a right-hand system set by using the center of each of the balls 5a of the ball rows 5 on the inner circumferential surface of the inner ring 3 as the origin and with a x-axis, a y-axis, and the z-axis defined as a transfer direction of the ball 5a (the revolution direction R1), the axial direction of the inner ring 3, and an upper direction (direction away from the inner circumferential surface of the inner ring 3), respectively, as depicted in Fig. 5.

Under this coordinate system, regarding the rotation of the balls 5a of the outer ball rows 5Lo, 5Ro about its own axis, the basic component based on the relative rotation between the inner ring 3 and the outer ring 4 is a rotation component about the y-axis, and the component based on the relative difference between the revolution driving force Fo of the outer ball row 5Lo (5Ro) and the revolution driving force Fi of the inner ball row 5Li (5Ri) (the component based on the reaction force) is a component about the z-axis (denoted by symbol z) as depicted in Fig. 4. In this case, the rotation components of all the balls 5a about the z-axis in the outer ball rows 5Lo, 5Ro are in the same direction in the same rows, while the direction of the rotation components of the balls 5a about the z-axis in the left outer ball row 5Lo is opposite to the direction of the rotation components of the balls 5a about the z-axis in the right outer ball row 5Ro (see arrows in the counterclockwise direction for the balls 5a of the left outer ball row 5Lo and arrows in the clockwise direction for the balls 5a of the right outer ball row 5Ro in Fig. 4).

As a result, the rotation of the balls 5a in the outer ball rows 5Lo, 5Ro about its own axis is rotation about a combined axis SA of the y-axis and the z-axis and, as depicted in Fig. 6, the combined axis SA is inclined on a y-z plane in the coordinate system at an angle corresponding to a ratio of the number of rotations about the y-axis and the number of rotations about the z-axis. In this case, the combined axes SA1 and SA2 are depicted in Fig. 6 as combined axes SA arranged symmetrically about the y-axis (denoted by symbol y) in the y-z plane indicate combined axes at the time of one and the other rotation directions about the z-axis based on one rotation direction about the y-axis. Therefore, as depicted in Fig. 7, the balls 5a of the left and right outer ball rows 5Lo, 5Ro rotate (about its own axis) in opposite directions about the symmetrically inclined combined axes SA (SA1, SA2).

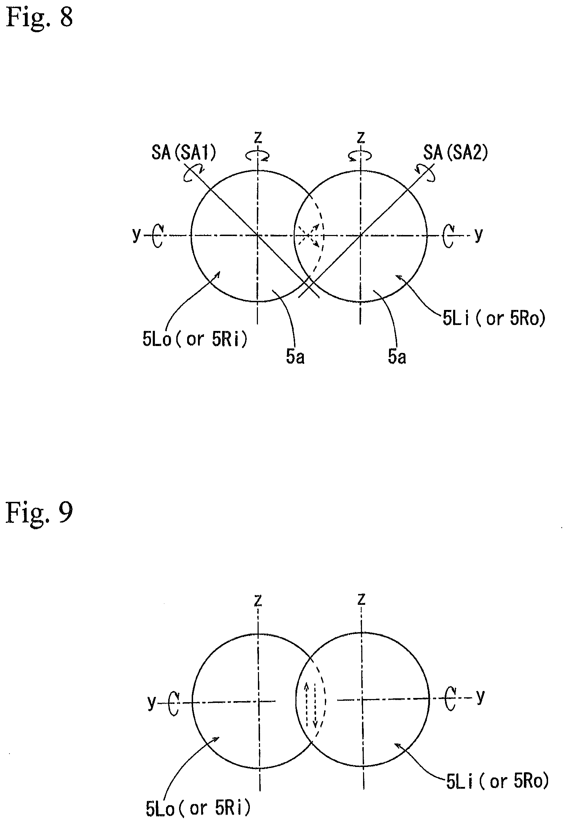

(5) When the rotation component is generated about the z-axis in each of the balls 5a of the outer ball row 5Lo (5Ro) as described above, the rotation component of each of the balls 5a of the outer ball row 5Lo (5Ro) is accordingly transmitted to each of the balls 5a of the inner ball row 5Li (5Ri) adjacent thereto on the inner side of the outer ball row 5Lo (5Ro) as a rotation component in the opposite direction about the z-axis (reaction) and, as in the case of the balls 5a of the outer ball row 5Lo (5Ro) , the rotation component (rotation component about the z-axis) of each of the balls 5a in the inner ball row 5Li (5Ri) is combined with the rotation component (basic rotation component) about the y-axis, so that, as depicted in Fig. 7, the combined axis SA of each of the balls 5a of the inner ball row 5Li (5Ri) is in a symmetrical inclined state with respect to the combined axis SA of each of the balls 5a in the outer ball row 5Lo (5Ro) adjacent to the inner ball row 5Li (5Ri) . Therefore, all the balls 5a of the inner ball rows 5Li (5Ri) rotate (about their own axes) about the inclined combined axes SA (SA1 or SA2) in the direction opposite to the rotation direction of the balls 5a of the outer ball row 5Lo (5Ro) adjacent to the inner ball row 5Li (5Ri). s depicted in Fig. 8, the balls 5a of both of the rows 5Lo, 5Li (5Ro, 5Ri) move (rotate) at the contact portion (see a central portion in Fig. 8) in directions toward the same side (the right side in Fig. 8) (see crossing dashed arrows in the central portion in Fig. 8) although the directions of the movement (rotation) are not exactly the same.

In contrast, assuming that each of the balls 5a of the outer ball row 5Lo (5Ro) only rotates about the y-axis without rotating about the z-axis, the inclined combined axis SA is not formed in each of the balls 5a of the outer ball row 5Lo (5Ro) so that the balls 5a of the outer ball row 5Lo (5Ro) and the balls 5a of the inner ball row 5Li (5Ri) rotate about the y-axis. Therefore, as depicted in Fig. 9, the balls 5a of the outer ball row 5Lo (5Ro) and the balls 5a of the inner ball row 5Li (5Ri) move (rotate) at the contact portion (see a central portion in Fig. 9) in opposite directions (see parallel dashed arrows in the central portion in Fig. 9).

Obviously, the same phenomenon as this phenomenon also occurs in the case that balls of ball rows in the multirow ball bearing are arranged continuously in contact with each other.

As a result, when the balls 5a of the outer ball row 5Lo (5Ro) rotate about the z-axis, the frictional force is reduced as compared to when the balls 5a of the outer ball row 5Lo (5Ro) rotate about the y-axis without rotating about the z-axis.

(6) As in the case of the outer ball row 5Lo (5Ro) and the inner ball row 5Li (5Ri), as depicted in Fig. 4, the balls 5a of the left inner ball row 5Li and the balls 5a of the right inner ball row 5Ri are in contact with each other so that the balls 5a transmit the rotation components in the opposite directions about the z-axis to each other. The balls 5a of the left inner ball row 5Li and the balls 5a of the right inner ball row 5Ri each have the combined axis SA formed by the rotation component about the z-axis and the rotation component about the y-axis, so that the balls 5a of the left inner ball row 5Li and the balls 5a of the right inner ball row 5Ri each rotate about the combined axis SA.

In this case, the combined axes SA of the balls 5a of the left inner ball row 5Li and the balls 5a of the right inner ball row 5Ri are in a symmetrically inclined state (see Fig. 7). The balls 5a in both of the ball rows 5Li, 5Ri move (rotate) at the contact portion in directions toward the same side although the directions of the movement (rotation) are not exactly the same, which is equivalent to the case depicted in Fig. 8. Therefore, the balls 5a of the left inner ball row 5Li and the balls 5a of the right inner ball row 5Ri are in contact with each other while maintaining a state in which the rotation about its own axis is not mutually prevented as much as possible, so that a transmission path promoting smooth rotation of the balls 5a in the ball rows 5 about its own axis is formed between the left outer ball row 5Lo and the right outer ball row 5Ro.

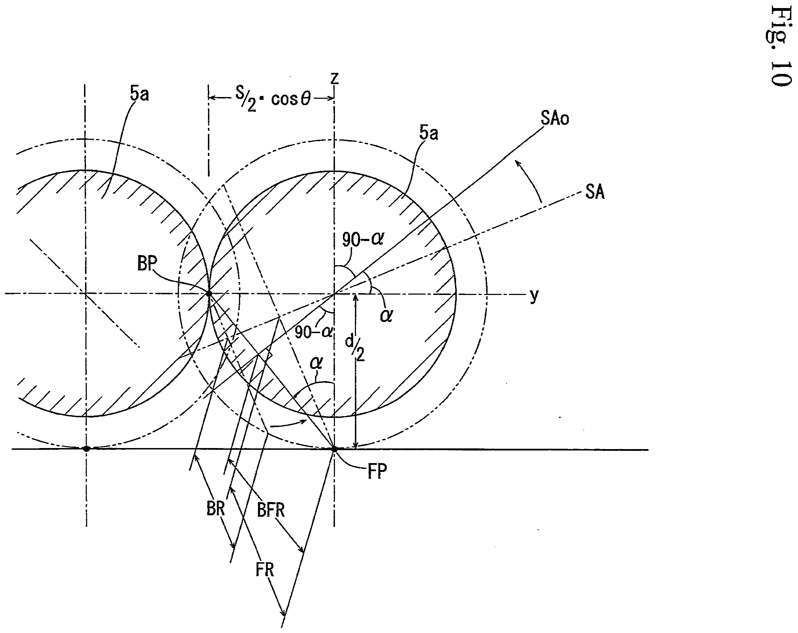

(7) As depicted in Fig. 10, the combined axis SA of each of the balls 5a in the ball rows 5 finally attains an optimum combined axis SA0 (a combined axis forming a rotation locus passing through both of the contact point between the ball 5a and the ball 5a of the ball row 5 adjacent to the ball 5a, and the contact point between the ball 5a and the inner circumferential surface of the inner ring 3).

As described above, when the rotation component about the z-axis acts on each of the balls 5a, the combined axis SA is formed in cooperation with the rotation component about the y-axis, and the ball 5a rotates about the combined axis SA (see Fig. 7). As depicted in Fig. 10, this combined axis SA initially has a smaller inclination angle relative to the y-axis than an inclination angle $\alpha$ of the optimum combined axis SA0 relative to the y-axis. When the ball 5a rotates about the combined axis SA, a rotation radius BR passing through a contact point BP of the ball 5a with the ball 5a of the adjacent ball row 5 is smaller than a rotation radius FR passing through a contact point FP of the ball 5a with the inner circumferential surface of the inner ring 3. This causes a slip, and the frictional resistance at the contact point BP between the balls 5a limits the rotation component about the y-axis, so that the rotation component about the z-axis becomes relatively larger. As a result, the inclination angle of the combined axis SA relative to the y-axis gradually increases (the combined axis SA comes closer to the optimum combined axis SA0), and the combined axis SA attains the optimum combined axis SA0 forming a rotation locus (rotation radius BFR) passing through both of the contact point BP between the ball 5a and the ball 5a of the ball row 5 adjacent to the ball 5a and the contact point FP between the ball 5a and the inner circumferential surface of the inner ring 3. The rotation of the ball 5a based on the optimum combined axis SA0 causes the least slip (the least frictional resistance) at the contact point BP with the ball 5a of the adjacent ball row 5, and the ball 5a rotates most efficiently and stably.

(8) The optimum combined axis SA0 will more specifically be described.

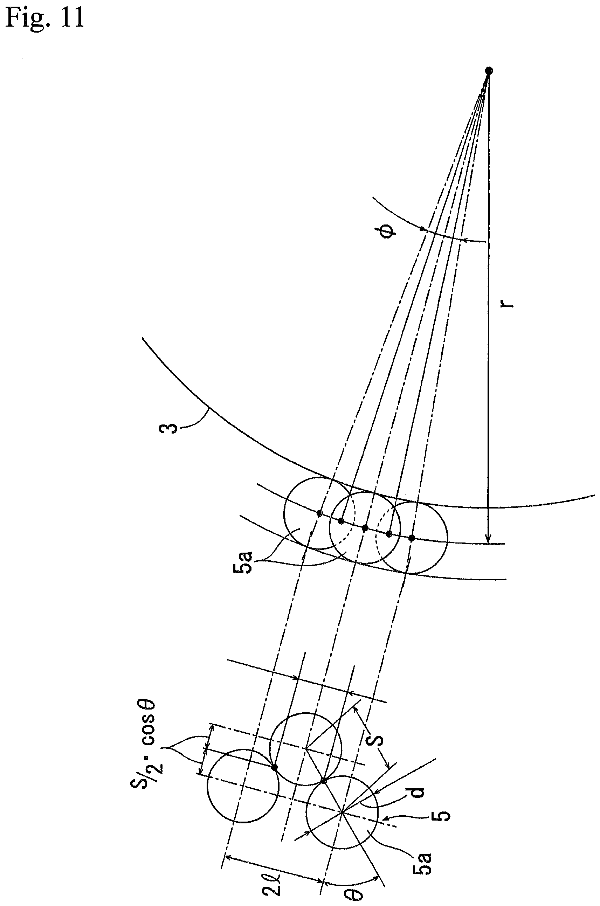

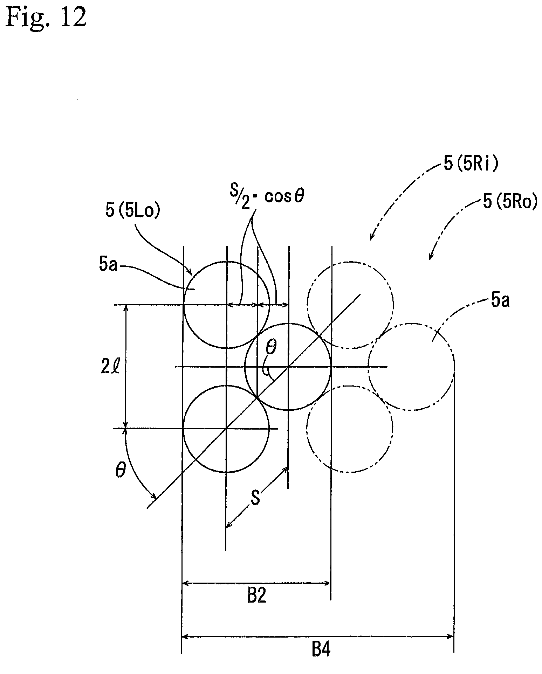

As is apparent from Fig. 10, an angle $\alpha$ made by the optimum combined axis SA0 relative to the y-axis is equal to an angle formed by a straight line (projection straight line to the y-z plane) passing through both of the contact point BP between the ball 5a and the ball 5a of the ball row 5 adjacent to the ball 5a and the contact point FP between the ball 5a and the inner circumferential surface of the inner ring 3 relative to the z-axis. Therefore, as depicted in Figs. 11 and 12, assuming that the balls 5a in contact with each other in the adjacent ball rows 5 have a center-to-center distance of s and a contact angle of $\theta$, the projection radius on the y-z plane of the contact point BP in each of the balls 5a can be expressed by using the distance s and the contact angle $\theta$ as $s/2 \cdot \cos\theta$ and, in this case, the distance s is equal to the diameter d of the ball 5a, and therefore, the angle $\alpha$ formed by the projection straight line (see Fig. 10) simultaneously passing through the contact point BP and the contact point FP relative to the z-axis can be expressed from the relationship depicted in Fig. 10 as follows:

$$\tan \alpha = \tan [(s/2 \cdot \cos \theta)/(d/2)] = \tan (\cos \theta).$$

Therefore, the angle $\alpha$ formed by the optimum combining axis SA0 relative to the y-axis is $\alpha$ (rad)=cos $\theta$.

It is noted that $\theta$ is set to $30° < \theta < 90°$. This is in order that the balls (rolling elements) 5a of the same ball row 5 are not brought into contact with each other when the multiple ball rows 5 are formed. Therefore, more specifically, $30° < \theta$ leads to

$$\alpha = \cos \theta < (3^{1/2}/2) \times (180/\pi) = 49.6°,$$

so that the angle $\alpha$ formed by the optimum combined axis SA0 relative to the y-axis does not exceed 49.6° at the maximum.

Therefore, in the case of this embodiment, as compared to a frictional resistance F in the case that the balls 5a are continuously brought into contact with each other in the row direction in the same ball row 5, the frictional force is reduced to Fcos $(\alpha)$=COS 49.6°>0.648*F, since a crossing angle is formed by movement directions at the contact point between the balls 5a in the adjacent ball rows 5.

In Figs. 11 and 12, r denotes a distance between the center of the ball (rolling element) 5a on the inner ring 3 and the axis of the inner ring 3 (the axis of the multirow ball bearing 1), and $\varphi$ denotes a central angle between center points of the adjacent balls 5a in the same ball row 5 when the r is used as the radius.

(9) As described above, in the first embodiment, each of the balls 5a of each of the ball rows 5 is brought into contact with two of the balls 5a arranged adjacently in the row direction in the ball row 5 adjacent to the ball row 5 while rotating about its own axis. However, the contacting balls 5a move (rotate) toward substantially the same side at both contact portions, so that the frictional force can significantly be reduced as compared to when the movement directions of the contact portions of the contacting balls 5a are opposite to each other (see Figs. 8 and 9).

In the case of this embodiment (four ball row arrangement), basically, the revolution driving force Fo of the outer ball row 5Lo (5Ro) is relatively larger than the revolution driving force Fi of the inner ball row 5Li (5Ri) so that the rotation component about the z-axis can be obtained in the balls 5a of the ball rows 5. A revolution driving force difference (Fo-Fi) is preferably made larger at the start of rotation between the outer ball row 5Lo (5Ro) and the inner ball row 5Li (5Ri) . This is because the balls 5a of the ball rows 5 not only can stably obtain the rotation component about the z-axis, but also can cause the combined axis SA to rapidly attain the state of the optimum combined axis SA0 so as to make the multi-row ball bearing preferable in terms of reduction in initial rotation resistance. Therefore, specifically, it is preferable to increase a difference in elastic modulus between the balls 5a of the outer ball row 5Lo (5Ro) and the balls 5a of the inner ball row 5Li (5Ri), e.g., using ceramic etc. having elastic modulus that is 1.5 times larger for balls made of steel), to make the diameter of each of the balls 5a of the inner ball row 5Li (5Ri) relatively larger by about several $\mu$ than the diameter of the outer ball row 5Lo (5Ro) (to form a difference in diameter) etc.

3. Even if a radial load (radial inward load) acts on the outer ring 4, the multirow ball bearing 1 can receive the radial load acting on the outer ring 4 in an approximately uniform state and can effectively disperse the radial load acting on the outer ring 4. This is because each of the balls 5a of each of the ball rows 5 is brought into contact with the balls 5a arranged adjacently in the row direction in the ball rows 5 adjacent to the ball row 5 so that the balls 5a do not individually freely roll and move (the balls integrally revolve while rotating about its own axis when the inner and outer rings 3, 4 relatively rotate). Therefore, the merits of the multirow arrangement can sufficiently be reflected in terms of an increase in basic dynamic load rating and a longer operating life.

Moreover, in this case, since the collision between the balls 5a due to the rolling movement of the balls 5a is eliminated, the balls 5a can be prevented from being damaged or generating a collision sound due to the collision.

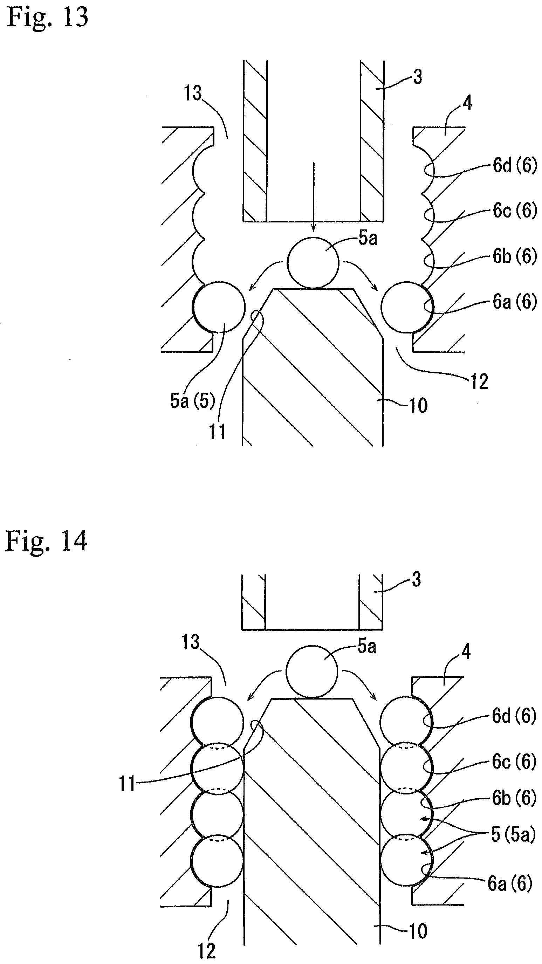

4. A method of manufacturing the multirow ball bearing 1 will be described with reference to Figs. 13 to 16.

(1) First, the outer ring 4 and a rod-shaped jig 10 are prepared as unique members used in this manufacturing method.

The member used as the outer ring 4 has an inner circumferential surface provided with the multiple raceway grooves 6 adjacent to each other in the axial direction as described above (see Fig. 13), and the member used as the rod-shaped jig 10 can be inserted into the outer ring 4 and has a tip end portion provided with a guide surface 11 having a diameter reduced from the inner side in the axial direction toward a tip end surface of the jig 10 (see Fig. 13).

(2) Subsequently, as depicted in Fig. 13, the jig 10 is inserted into the outer ring 4 from one opening 12 thereof to form a guide path for a raceway groove 6a closest to the opening 12 with the guide surface 11 (inserted tip end surface) of the jig 10, and the balls 5a are then supplied from the other opening 13 of the outer ring 4 into the outer ring 4 to perform a ball loading operation of loading the multiple balls 5a into the raceway groove 6a. This is because the balls 5a are guided to the raceway groove 6 without dropping the balls 5a from between the jig 10 and the inner circumferential surface of the outer ring 4 even when the ball loading operation is performed. In this operation, the balls 5a are loaded in the raceway groove 6a such that prescribed gaps S are formed between the adjacent balls 5a in the raceway groove 6a.

(3) After the loading operation of the balls 5a into the raceway groove 6a is completed, the jig 10 is advanced into the outer ring 4 toward the other opening 13 to sequentially form guide paths for raceway grooves 6b, 6c, 6d closer to the other opening 13 than the raceway groove 6a, and the ball loading operation is performed in each of the raceway grooves 6 by using each of the guide paths each time the guide path is formed (see Figs. 13 and 14). Additionally, in this operation, the balls 5a in the raceway grooves 6b, 6c, 6d are brought into contact with the adjacent balls 5a in a straddling manner at intervals in the row direction in the raceway grooves 6 adjacent to the raceway grooves 6b, 6c, 6d.

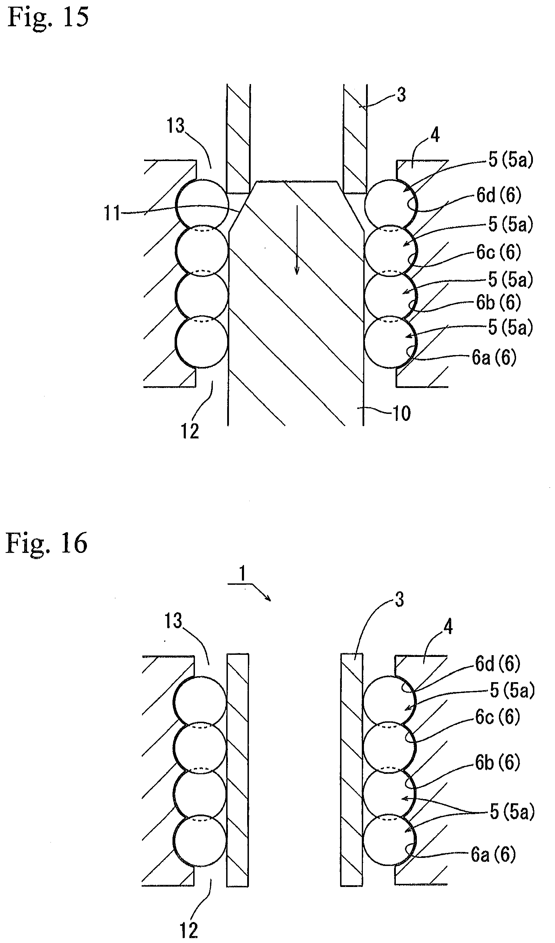

(4) After the ball loading operation for the raceway groove 6d closest to the other opening 13 of the outer ring 4 is completed, one end surface in the axial direction of the inner ring 3 brought into contact with the tip end surface of the jig 10 as depicted in Fig. 15. This is because the guide surface 11 of the jig 10 is used for restricting the displacement movement of the inner ring 3 in the radial direction when a setting operation is performed for positioning the inner ring 3 at an inner ring set position relative to the outer ring 4.

(5) After the one end surface in the axial direction of the inner ring 3 is brought into contact with the tip end surface of the jig 10, as depicted in Figs. 15 and 16, the jig 10 and the inner ring 3 are moved toward the one opening 12 of the outer ring 4 while maintaining the contacting relationship between the guide surface 11 of the jig 10 and the one end surface in the axial direction of the inner ring 3 so as to achieve a state in which the outer circumferential surface of the inner ring 3 faces the inner circumferential surface of the outer ring 4. This is because the inner ring 3 is guided to the position at which the outer circumferential surface thereof faces the inner circumferential surface of the outer ring 4 while the outer circumferential surface of the jig 10 and the outer circumferential surface of the inner ring 3 restricts the balls 5a loaded in the raceway grooves 6 from falling off.

(6) This leads to a configuration in which the multiple ball rows 5 are interposed between the inner ring 3 and the outer ring 4, and the multirow ball bearing 1 is manufactured. Obviously, in this case, a fastener is attached for restricting a relative movement of the inner ring 3 and the outer ring 4 in the axial direction.

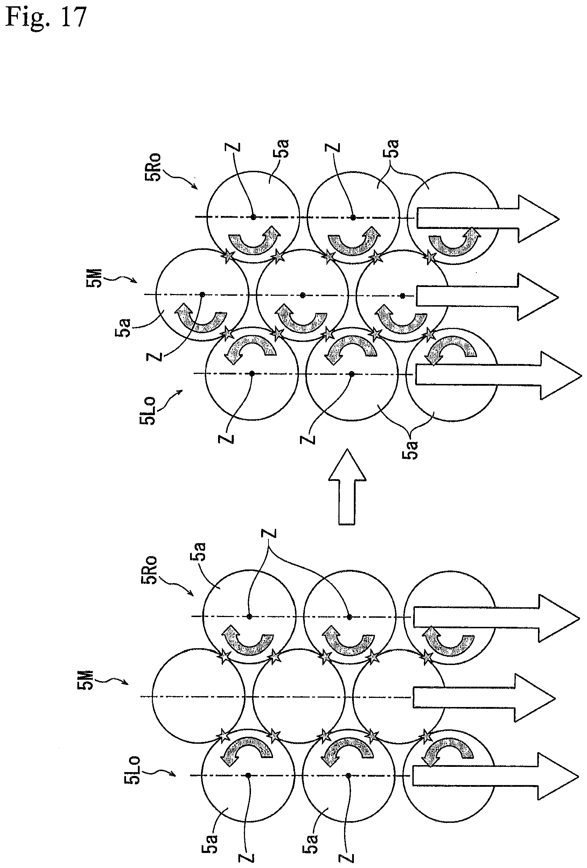

5. Fig. 17 illustrates a second embodiment. The second embodiment is a modification of the first embodiment (the multirow ball bearing 1) and is illustrated as the ball rows 5 arranged in three rows (odd rows) in the width direction (left-right direction in Fig. 17) on the outer circumferential surface of the inner ring 3 (not depicted in Fig. 17) . In the second embodiment, the same constituent elements as those of the first embodiment are denoted by the same reference signs and will not be described.

(1) In the structure (the ball rows 5 arranged in three rows), regarding the balls 5a of the left and right outer ball rows 5Lo, 5Ro, as in the case of the ball rows 5 arranged in four rows (even rows), the directions of the rotation components about the z-axis of all the balls 5a in the outer ball rows 5Lo, 5Ro become the same directions in the same rows due to the relative rotation between the inner ring 3 and the outer ring 4, while the direction of the rotation components about the z-axis of the balls 5a of the left outer ball row 5Lo is made different from the direction of the rotation component about the z-axis of the balls 5a in the right outer ball row 5Ro (see, specifically, arrows in the counterclockwise direction for the rotation components of the balls 5a in the left outer ball row 5Lo and arrows in the clockwise direction for the rotation components of the balls 5a in the right outer ball row 5Ro in a left portion in Fig. 4). On the other hand, equal rotation forces in opposite directions are transmitted to the balls 5a of a central row (inner ball row) 5M from the balls 5a of the left and right outer ball rows 5Lo, 5Ro in terms of the rotation component about the z-axis, which attempts to make the balls 5a of the inner ball row that is the central row non-rotatable about the z-axis (see the left portion in Fig. 17).

However, the inventor of the present invention thinks that if various variations exist at a normal level, balance is slightly broken between the contact resistance of the balls 5a of the central row 5M to the balls 5a of the outer row 5Lo and the contact resistance of the balls 5a of the central row 5M to the balls 5a of the outer row 5Ro and a larger driving force (reaction force) can be generated in the outer ball row 5Lo (or 5Ro) on one side as compared to the other side although instability exists. Therefore, if a larger driving force (reaction force) is generated in the outer ball row 5Lo (or 5Ro) on one side as compared to the other side, the rotation component about the z-axis is generated at earlier timing in the balls 5a in the outer ball row 5Lo (or 5Ro) on the one side (see counterclockwise rotation arrows in a right portion in Fig. 17), and this rotation component and the rotation component about the y-axis form the combined axis SA in the balls 5a of the outer ball row 5Lo (or 5Ro) on the one side, and the balls 5a rotate about the combined axis SA.

Since the rotation component about the z-axis is generated in the balls 5a in the outer ball row 5Lo (or 5Ro) on the one side, the rotation component is sequentially transmitted to the balls 5a in the central row 5M and the balls 5a in the outer ball row 5Ro (or 5Lo) on the other side (see clockwise and counterclockwise rotation arrows in the right portion in Fig. 17). And, the rotation components about the z-axis and the rotation component about the y-axis form the alternately (symmetrically) inclined combined axes SA in the balls 5a of the central row 5M and the balls 5a of the outer ball row 5Ro (or 5Lo) on the other side, so that the balls 5a in the central row 5M and the balls 5a of the outer ball row 5Ro (or 5Lo) on the other side rotate about the combined axes SA.

(2) However, if the operation of the balls 5a of the ball rows 5 is left to various variations of a normal level as described above, the operation lacks stability and reliability.

Therefore, in this embodiment, the balance is appropriately broken between the contact resistance of the balls 5a in the central row 5M to the balls 5a in the outer row 5Lo and the contact resistance of the balls 5a of the central row 5M to the balls 5a in the outer row 5Ro, so that the rotation component about the z-axis is inevitably generated at earlier timing in the balls 5a in the outer ball row 5Lo (or 5Ro) on one side. Specifically, the balance between the contact resistance of the balls 5a in the central row 5M to the balls 5a in the outer row 5Lo and the contact resistance of the balls 5a of the central row 5M to the balls 5a in the outer row 5Ro is reliably slightly broken by making the balls 5a of the outer ball rows 5Lo, 5Ro made different in material, making the diameters of the balls 5a of the outer ball rows 5Lo, 5Ro different by about several $\mu$ to change the resistance, disposing a slight step on the inner circumference surface of the inner ring 3 to change the resistance, etc.

Obviously, also in this case, the combined axis SA of each of the balls 5a in the ball rows 5Lo, 5M, 5Ro shifts to the optimum combined axis SA0 over time.

(3) Therefore, regarding a frictional force reduction, as in the multirow ball bearing 1 having the ball rows 5 arranged in four rows (even rows), the multirow ball bearing 1 having the ball rows 5 arranged in three rows (odd rows) can reduce the frictional force as compared to when the movement directions of the contact portions between the balls 5a are opposite to each other (see Fig. 9).

In Fig. 17, only the rotation component about the z-axis is depicted, and the rotation component about the y-axis is not depicted.

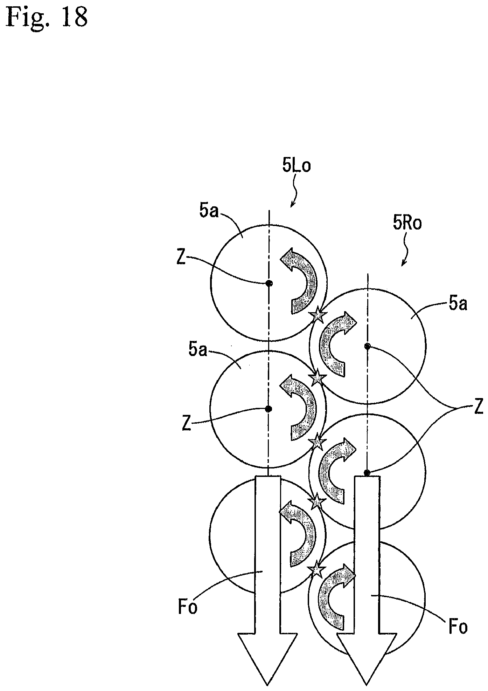

6. Fig. 18 illustrates a third embodiment. The third embodiment is a modification of the first and second embodiments (the multirow ball bearing 1) and is illustrated as the ball rows 5 arranged in two rows (odd rows) in the width direction (left-right direction in Fig. 18) on the outer circumferential surface of the inner ring 3 (not depicted in Fig. 18). In the third embodiment, the same constituent elements as those of the first and second embodiments are denoted by the same reference signs and will not be described.

(1) When the ball rows 5 are arranged in two rows, the balls 5a in the left and right outer ball rows 5Lo, 5Ro are brought into contact with each other without an inner ball therebetween, and the same revolution driving force Fo acts on the two outer ball rows 5Lo, 5Ro due to the relative rotation of the inner and outer rings 3, 4. In this case, each of the balls 5a in the outer ball rows 5Lo, 5Ro inputs to the ball 5a in contact with the ball 5a a pressing force based on the revolution driving force Fo from a contact point on the front side in the revolution direction R1 (a lower contact point of each of the balls 5a in the outer ball row 5Lo (5Ro) in Fig. 18), and so that a reaction force acts as the reaction on the balls 5a applying the pressing force. This reaction force has a point of action (contact portion) of the reaction force offset relative to the z-axis of each of the balls 5a and therefore generates a rotation component about the z-axis (moment about the z-axis) for each of the balls 5a in the outer ball rows 5Lo, 5Ro. Therefore, the symmetrically inclined combined axes SA are respectively formed in the balls 5a in the outer ball rows 5Lo, 5Ro by the rotation component about the z-axis and the rotation component about the y-axis, and the balls 5a in the outer ball rows 5Lo, 5Ro are respectively rotated about the combined axes SA.

Obviously, also in this case, the combined axis SA of each of the balls 5a in the ball rows 5Lo, 5Ro shifts to the optimum combined axis SA0 over time.

(2) Therefore, regarding a frictional force reduction, as in the multirow ball bearing 1 having the ball rows 5 arranged in four rows (even rows), the multirow ball bearing 1 having the ball rows 5 arranged in two rows (even rows) can reduce the frictional force as compared to when the movement directions of the contact portions between the balls 5a are opposite to each other (see Fig. 9).

In Fig. 18, only the rotation component about the z-axis is depicted, and the rotation component about the y-axis is not depicted.

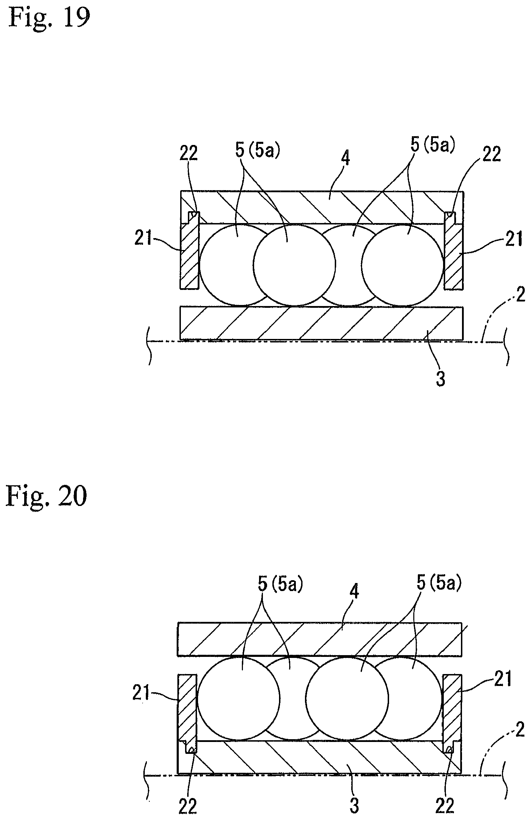

7. Fig. 19 illustrates a fourth embodiment. The fourth embodiment illustrates a modification of the first embodiment. In the fourth embodiment, the same constituent elements as those of the first embodiment are denoted by the same reference signs and will not be described.

In the fourth embodiment, guide parts (restricting parts) 21 are disposed on both outer side portions in the axial direction of the outer ring 4 over the entire circumferences thereof, and the multiple ball rows 5 are restricted by the guide parts 21 from moving in the axial direction to the outside of the inner ring 3 and the outer ring 4.

Specifically, the inner circumferential surface of the outer ring 4 is provided with attachment grooves 22 formed over the entire circumferences on both sides in the width direction (both sides in the axial direction), and expandable/contactable rings such as so-called C rings are used as the guide parts 21, so that the guide parts 21 are fitted into the attachment grooves 22 by using the expandable/contactable properties thereof. Accordingly, the outer circumferential surface of the inner ring 3 and the inner circumferential surface of the outer ring 4 are formed as smooth raceway surfaces, and the raceway grooves 6 for fitting the multiple ball rows 5 are formed on neither the inner ring 3 nor the outer ring 4.

When this multirow ball bearing 1 is manufactured, the guide part 21 is attached in advance to a side portion on one side in the axial direction of the outer ring 4, the balls 5a are loaded from the other side in the axial direction of the outer ring 4 between the inner ring 3 and the outer ring 4, and after the loading is completed, the guide part 21 is attached to a side portion on the other side in the axial direction of the outer ring 4.

As a result, even if the raceway grooves 6 are not formed on the inner ring 3 and the outer ring 4, the multiple ball rows 5 can appropriately be interposed between the inner ring 3 and the outer ring 4 while being restricted from moving in the axial direction to the outside of the inner ring 3 and the outer ring 4.

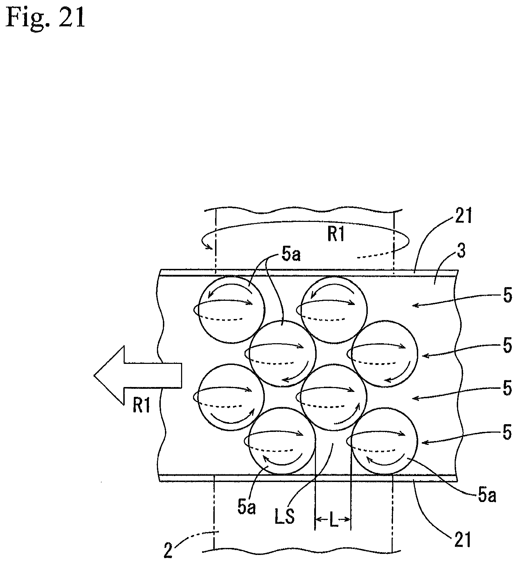

8. Figs. 20 and 21 illustrate a fifth embodiment. The fifth embodiment illustrates a modification of the fourth embodiment and, in the fifth embodiment, the same constituent elements as those of the fourth embodiment are denoted by the same reference signs and will not be described.

In the fifth embodiment, the outer circumferential surface of the inner ring 3 is provided with the attachment grooves 22 formed over the entire circumferences on both sides in the width direction (both sides in the axial direction), and expandable/contactable rings such as so-called C rings are used as the guide parts 21, so that the guide parts 21 are fitted into the attachment grooves 22 by using the expandable/contactable properties thereof. Accordingly, also in the third embodiment, even if the raceway grooves 6 are not formed on the inner ring 3 or the outer ring 4, the multiple ball rows 5 can appropriately be interposed between the inner ring 3 and the outer ring 4 while being restricted from moving in the axial direction to the outside of the inner ring 3 and the outer ring 4.

Additionally, in this multirow ball bearing 1, the balls 5a in the left and right outer ball rows 5Lo, 5Ro are each bought into contact with the guide part 21 while rotating (in a state of maintaining the z-axis rotation component), and the balls 5a in the left and right outer ball rows 5Lo, 5Ro face the same side as the movement direction of the inner ring 3 at the contact portions with the guide parts 21 of the inner ring 3 although not exactly in the same direction (see the rotation direction of the rotation component about the z-axis in Fig. 20), so that the direction is not completely opposite to the movement direction of the inner ring 3. Therefore, even if the guide parts 21 are disposed on the inner ring 3, the frictional force can be reduced at the contact portions between the guide part 21 and the balls 5a in the left and right outer ball rows 5Lo, 5Ro.

[Example]

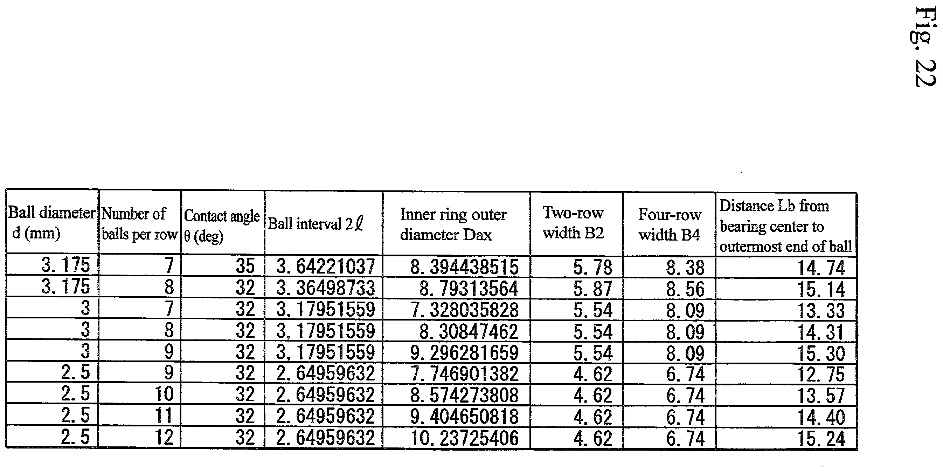

9. Fig. 22 illustrates dimensions etc. of elements in the multirow ball bearing 1 as a specific structure. The contact angle $\theta$, a ball 5a interval 21, a two-row width B2, and a four-row width B4 in Fig. 22 are as depicted in Fig. 12, and a distance Lb from the center of the multirow ball bearing 1 to the outermost end of the ball 5a and an outer diameter Dax of the inner ring 3 are as depicted in Fig. 2.

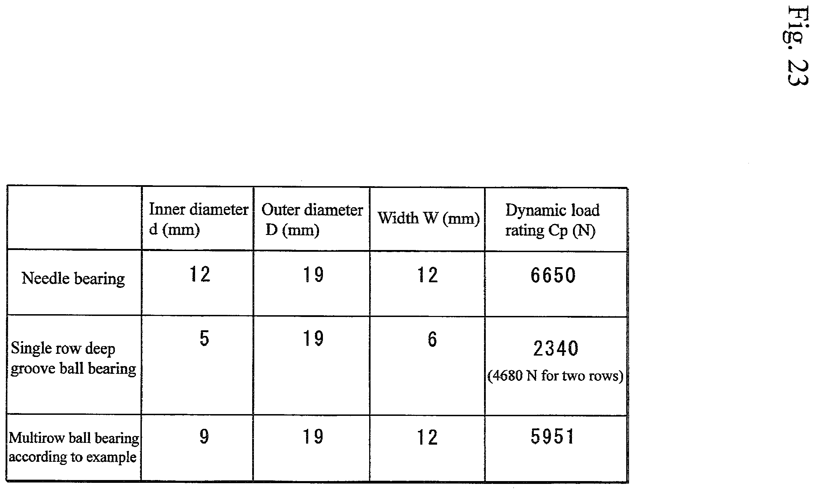

10. Fig. 23 illustrates basic dynamic load ratings of various bearings.

According to Fig. 23, although unable to attain levels of values of a needle bearing in terms of the basic dynamic load rating, the multirow ball bearing 1 according to the example achieved values considerably exceeding those of a double row deep groove ball bearing derived from a single row deep groove ball bearing. It is thought that this is a result of the effective dispersion of the radial load enabled since the multirow ball bearing 1 according to the example receives the radial load with the multiple balls 5a of the multiple ball rows 5 and restricts the free rolling movement of the balls 5a.

11. Although the embodiments have been described above, the present invention includes the following aspects.

(1) An aspect of disposing the guide parts 21 is implemented as an aspect in which the guide parts 21 are alternately disposed on the outer side portion on one side in the axial direction of the outer ring 4 and the outer side portion on the other side in the axial direction of the inner ring 3.

(2) The number of ball rows of the multirow ball bearing 1 can appropriately be selected.

(3) When the multirow ball bearing 1A is used, a support shaft is attached to the inner ring 3, and the outer ring 4 side is rotationally driven.

REFERENCE SIGNS LIST

| | |
|---|---|
| 1 | multirow ball bearing |
| 3 | inner ring |
| 4 | outer ring |
| 5 | ball row |
| 5a | ball |
| 5Lo | left outer ball row |
| 5Ro | right outer ball row |
| 5Li | left inner ball row |
| 5Ri | right inner ball row |
| 5M | central row |
| 6 | raceway groove |
| 10 | jig |
| 12 | one opening of outer ring |
| 13 | the other opening of outer ring |
| 21 | guide part (restricting part) |
| 22 | attachment groove |
| L | predetermined interval |
| LS | space of predetermined interval |
| Fo, Fi | revolution driving force |

**Claims**

1. A multirow ball bearing including multiple ball rows interposed between an inner ring and an outer ring disposed on the outer circumferential side of the inner ring such that the ball rows are adjacent to each other in an axial direction of the inner ring and the outer ring, wherein
each of the multiple ball rows includes balls arranged with prescribed gaps in the ball row and is arranged to be shifted in a row direction of the ball row relative to a ball row adjacent to the ball row, and wherein
the balls in each of the ball rows face spaces formed by the prescribed gaps in a ball row adjacent to the ball row and are each brought into contact with two of the balls forming each of the prescribed gaps.

2. The multirow ball bearing according to claim 1, wherein
the multiple ball rows are four or more even rows, and wherein
the multiple ball rows are set such that during relative rotation between the inner ring and the outer ring, a revolution driving force of the outermost ball rows becomes relatively larger than a revolution driving force of the inner ball rows adjacent to the outermost ball rows.

3. The multirow ball bearing according to claim 1, wherein
the multiple ball rows are three or more odd rows, and wherein
the multiple ball rows are set such that a contact resistance to balls in one outermost ball row from balls of an inner ball row adjacent to the one outermost ball row is different from a contact resistance to balls in the other outermost ball row from balls of an inner ball row adjacent to the other outermost ball row.

4. The multirow ball bearing according to claim 1, wherein
the multiple ball rows are two rows.

5. The multirow ball bearing according to claim 1, wherein

raceway grooves for fitting the multiple ball rows are respectively formed on at least one of an outer circumferential surface of the inner ring and an inner circumferential surface of the outer ring.

6. The multirow ball bearing according to claim 1, wherein
outer side portions in an axial direction of at least one of the inner ring and the outer ring are provided with restricting parts for restricting the multiple ball rows from moving in the axial direction to the outside of the inner ring and the outer ring on both sides in the axial direction of the inner ring and the outer ring.

7. The multirow ball bearing according to claim 6, wherein
the restricting parts are disposed on at least one of both outer side portions in the axial direction of the inner ring and both outer side portions in the axial direction of the outer ring.

8. The multirow ball bearing according to claim 7, wherein
the multiple ball rows are made up of even rows.

9. A method of manufacturing a multirow ball bearing including multiple ball rows interposed between an inner ring and an outer ring disposed on the outer circumferential side of the inner ring such that the ball rows are adjacent to each other in an axial direction of the inner ring and the outer ring, the method comprising:

preparing as the outer ring a ring provided with multiple raceway grooves formed adjacently in the axial direction of the outer ring on an inner circumferential surface of the outer ring and a rod-shaped jig enabled to enter the inside of the outer ring;
first, inserting the jig from one opening of the outer ring into the outer ring to form a guide path for the raceway groove closest to the one opening of the outer ring with an inserted tip end surface of the jig, and supplying the balls from the other opening of the outer ring into the outer ring to perform a ball loading operation of loading multiple balls into the raceway groove closest to the one opening of the outer ring;
subsequently, advancing the jig into the outer ring toward the other opening of the outer ring to sequentially form guide paths for the raceway grooves closer to the other opening of the outer ring than the raceway groove closest to the one opening of the outer ring, and performing the ball loading operation in each of the raceway grooves by using each of the guide paths each time the guide path is formed, so as to bring the balls in each of the raceway grooves into contact with balls adjacently arranged at intervals in a row direction in the raceway grooves adjacent to the raceway groove in a straddling manner between the adjacently arranged balls;
subsequently, after the ball loading operation for the raceway groove closest to the other opening of the outer ring is completed, bringing one end surface in the axial direction of the inner ring into contact with the tip end surface of the jig; and
subsequently, moving the jig and the inner ring toward the one opening of the outer ring while maintaining a contacting relationship between the tip end surface of the jig and the one end surface in the axial direction of the inner ring so as to achieve a state in which an outer circumferential surface of the inner ring faces an inner circumferential surface of the outer ring.

Fig. 1

Fig. 2

Fig. 3

Fig. 4

## Fig. 5

## Fig. 6

## Fig. 7

Fig. 8

Fig. 9

## Fig. 10

Fig. 11

Fig. 12

Fig. 13

Fig. 14

Fig. 15

Fig. 16

Fig. 17

Fig. 18

Fig. 19

Fig. 20

Fig. 21

# Fig. 22

| Ball diameter d (mm) | Number of balls per row | Contact angle θ (deg) | Ball interval 2ℓ | Inner ring outer diameter Dax | Two-row width B2 | Four-row width B4 | Distance Lb from bearing center to outermost end of ball |
|---|---|---|---|---|---|---|---|
| 3.175 | 7 | 35 | 3.64221037 | 8.394438515 | 5.78 | 8.38 | 14.74 |
| 3.175 | 8 | 32 | 3.36498733 | 8.79313564 | 5.87 | 8.56 | 15.14 |
| 3 | 7 | 32 | 3.17951559 | 7.328035828 | 5.54 | 8.09 | 13.33 |
| 3 | 8 | 32 | 3.17951559 | 8.30847462 | 5.54 | 8.09 | 14.31 |
| 3 | 9 | 32 | 3.17951559 | 9.296281659 | 5.54 | 8.09 | 15.30 |
| 2.5 | 9 | 32 | 2.64959632 | 7.746901382 | 4.62 | 6.74 | 12.75 |
| 2.5 | 10 | 32 | 2.64959632 | 8.574273808 | 4.62 | 6.74 | 13.57 |
| 2.5 | 11 | 32 | 2.64959632 | 9.404650818 | 4.62 | 6.74 | 14.40 |
| 2.5 | 12 | 32 | 2.64959632 | 10.23725406 | 4.62 | 6.74 | 15.24 |

# Fig. 23

| | Inner diameter d (mm) | Outer diameter D (mm) | Width W (mm) | Dynamic load rating Cp (N) |
|---|---|---|---|---|
| Needle bearing | 12 | 19 | 12 | 6650 |
| Single row deep groove ball bearing | 5 | 19 | 6 | 2340 (4680 N for two rows) |
| Multirow ball bearing according to example | 9 | 19 | 12 | 5951 |

## INTERNATIONAL SEARCH REPORT

| International application No. |
| --- |
| PCT/JP2017/037450 |

**A.  CLASSIFICATION OF SUBJECT MATTER**
Int. Cl. F16C19/08(2006.01)i, F16C43/06(2006.01)i

According to International Patent Classification (IPC) or to both national classification and IPC

**B.  FIELDS SEARCHED**

Minimum documentation searched (classification system followed by classification symbols)
Int. Cl. F16C19/08, F16C43/06, B23P21/00

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | Microfilm of the specification and drawings annexed to the request of Japanese Utility Model Application No. 150240/1985 (Laid-open No. 56822/1987) (SHIMADZU CORP.) 08 April 1987, description, page 4, line 18, to page 9, line 13, fig. 1-3, (Family: none) | 1, 4, 5<br>2, 6-8<br>3, 9 |
| Y | JP 11-210746 A (MATOBA, Yoshinori) 03 August 1999, paragraphs [0017], [0019], [0020], fig. 1, 3, 4, 6, (Family: none) | 2, 6-8 |
| Y | JP 10-15241 Y1 (MIYATA, Fujitaro) 08 October 1935, fig. 1, 2 (Family: none) | 6-8 |

☒  Further documents are listed in the continuation of Box C.        ☐  See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>09.01.2018 | Date of mailing of the international search report<br>23.01.2018 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

INTERNATIONAL SEARCH REPORT

International application No.

PCT/JP2017/037450

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 127929/1979 (Laid-open No. 44224/1981) (TOKYO SEIMITSU CO., LTD.) 21 April 1981, description, page 3, line 16 to page 5, line 5, fig. 5, 6, (Family: none) | 9 |

**EP 3 699 445 A1**

**Patent documents cited in the description**

- JP 2005048932 A